# FASCICULE DE BREVET EUROPEEN

(11) **EP 1 676 775 B1**
(45) Date de publication et mention de la délivrance du brevet: **18.11.2015**
(21) Numéro de dépôt: 05026158.5
(22) Date de dépôt: 01.12.2005
(51) Int. Cl.: B29C 33/48, B64C 27/04, B29C 70/30, B64C 27/82, B29C 70/34, B29B 11/16, B29L 31/30, B64F 5/00, B29L 31/08

(54) **Procédé et dispositif de fabrication d'une carène de rotor d'hélicoptère, et carène obtenue**
Verfahren und Vorrichtung zur Herstellung eines Gehäuses für einen Hubschrauberrotor
Method and device of fabrication of an helicopter rotor housing

(30) Priorité: 16.12.2004 FR 0413397
(43) Date de publication de la demande: 05.07.2006
(73) Titulaire: Airbus Helicopters, 13725 Marignane Cedex (FR)
(72) Inventeur: Maille, Laurence, 13720 Belcodene (FR); Mouton, Luc, 13510 Eguilles (FR)
(74) Mandataire: GPI & Associés

(56) Documents cités:
- EP-A- 1 308 265
- WO-A-96/09159
- FR-A- 2 556 650
- US-A- 5 158 733
- US-A- 5 251 847
- US-A- 5 498 129
- US-A1- 2002 081 346
- US-A1- 2004 070 108
- US-A1- 2004 079 838
- "HELICOPTER YAW CONTROL" AIRCRAFT ENGINEERING, BUNHILL PUBLICATIONS LTD. LONDON, GB, vol. 62, no. 5, 1 mai 1990 (1990-05-01), pages 23-25, XP000176435

## Description

La présente invention est relative à la fabrication d'une structure de carénage d'un rotor anti-couple d'aéronef à voilure tournante - en particulier d'un hélicoptère.

Le domaine technique de l'invention est celui de la fabrication d'hélicoptères, et plus particulièrement la fabrication des structures de queue d'hélicoptères comportant un rotor anti-couple caréné.

Le document US5498129 décrit une telle structure qui est fixée à l'extrémité arrière d'une poutre de queue prolongeant le fuselage, et qui reçoit un rotor s'opposant au couple exercé sur le fuselage par le rotor principal de sustentation et d'avance de l'aéronef.

Cette structure comporte une paroi annulaire (ou tubulaire) formant un conduit délimitant une veine d'écoulement du flux d'air mû par le rotor anti-couple qui est logé dans ce conduit.

Généralement, ce conduit présente successivement, d'amont en aval, un convergent d'entrée, une partie cylindrique (de rayon constant), et un divergent se terminant par une sortie de veine à bord arrondi ; chaque extrémité du conduit comporte une bride ou collerette annulaire.

La structure de queue comporte en outre deux flancs latéraux (un flanc gauche et un flanc droit) ou parois latérales de carène, chacun(e) percé(e) d'un orifice et respectivement solidaire - par le bord de cet orifice - d'une des deux brides du conduit tubulaire.

La structure de queue comporte en outre un empennage ou dérive sensiblement vertical(e), solidaire des parois latérales de carène et s'étendant au dessus de celles-ci, sensiblement le long d'un plan vertical antéro postérieur de symétrie générale du fuselage de l'aéronef, ou bien avec une inclinaison par rapport à ce plan.

Une telle structure de queue est ainsi généralement obtenue par l'assemblage d'au moins quatre pièces principales, auxquelles s'ajoutent des pièces de renforts s'étendant entre les parois latérales du carénage qu'elles relient, ainsi qu'au moins une pièce de liaison pour fixer cette structure de queue à la poutre de queue.

Ces différentes pièces sont généralement fabriquées en un matériau composite comportant une matrice organique et des fibres de renfort ; une partie des parois latérales de carénage et de la paroi du conduit annulaire décrites dans ces brevets, comporte en outre une couche de nid d'abeille (ou équivalent).

Pour fabriquer chacune de ces pièces, on dépose habituellement, sur un moule mâle (en relief) ou dans un moule femelle (en creux) de forme adaptée à celle de la pièce, une ou plusieurs couche(s) d'un tissu pré imprégné ou « prepreg » généralement essentiellement constitué de fibres (de carbone par exemple) enduites d'une résine thermodurcissable ; lors de cette opération dite de drapage, les fibres sont orientées selon une ou plusieurs direction(s) prédéterminée(s) pour obtenir les caractéristiques mécaniques recherchées pour la pièce.

Lorsque la pièce à réaliser comporte une âme épaisse tel qu'un nid d'abeille, on procède généralement à un premier drapage destiné à former une peau (interne ou externe), puis au dépôt de l'âme, puis généralement à un second drapage recouvrant l'âme et destiné à former une seconde peau (externe ou interne respectivement).

La rigidification de la préforme ainsi obtenue est ensuite réalisée à chaud et le cas échéant sous vide, dans un autoclave ou une étuve dans laquelle on a placé un moule complet (mâle et femelle) enserrant la préforme ; cette étape permet la polymérisation ou réticulation de la matrice organique.

Les opérations de réalisation de la préforme sont généralement réalisées manuellement, ce qui occasionne des pertes de matériau composite, et ne permet pas d'obtenir une parfaite reproductibilité des caractéristiques mécaniques des pièces d'une série de pièces de forme identique.

Afin de mécaniser l'opération de drapage, il est connu d'utiliser une technique dite de placement de fibres, selon laquelle le dépôt de fibres pré imprégnées est réalisé par une machine, sur la surface externe d'un mandrin monté rotatif selon un axe de rotation, comme décrit notamment dans le document US6613258.

Cependant, cette technique est généralement limitée à la fabrication de pièces de forme convexe et présentant une symétrie de révolution, ce qui n'est pas le cas d'une structure de queue d'un aéronef à voilure tournante et rotor arrière caréné. En particulier, la zone avant de liaison entre la dérive et le corps de la carène présente des formes complexes à courbures multiples : des zones d'inversion de courbure dans lesquelles une paroi concave jouxte une paroi convexe, et des zones de faible rayon de courbure.

La fabrication d'une telle structure de queue nécessite ensuite l'assemblage de ces pièces en matériau composite, par collage de parties de ces pièces placées en position de recouvrement mutuel, par rivetage, par collage et rivetage et/ou par d'autres moyens de liaison.

Ces techniques de liaison ne permettent pas non plus d'obtenir une parfaite reproductibilité des caractéristiques mécaniques de la structure résultant de cet assemblage. Ces techniques de liaison conduisent en outre à une augmentation préjudiciable de la masse de la structure obtenue par l'assemblage.

Le document US20040070108 décrit la solidarisation par solidification d'une matrice (« co-curing ») avec uniquement la liaison entre des renforts internes et la coque. Pour d'autres fixations soit ce document propose l'usage de perçages ("mounting holes ») pour la réception de pièces d'accrochage (« screws & bolts"). Des feuilles de compensation («caul sheet ») qui ne sont pas solidarisées à la structure composite.

Un objet de l'invention est un procédé de fabrication d'une structure de carénage de rotor de queue d'un aéronef à voilure tournante, qui soit amélioré et/ou qui remédie, en partie au moins, aux inconvénients des procédés connus de fabrication de ces structures.

Un autre objet de l'invention est un outillage ou dispositif de fabrication adapté à la mise en oeuvre de ce procédé.

Encore un objet de l'invention est une structure composite de queue d'aéronef à voilure tournante.

L'invention est définie par les revendications.

Ainsi, l'invention s'applique à un procédé de fabrication d'une structure de carénage de rotor d'un aéronef à voilure tournante selon la revendication 1.

On obtient ainsi, en une seule opération, une coque comportant les deux parois latérales de carénage, qui est apte à recevoir la paroi tubulaire délimitant la veine de passage d'air, sans collage ni ajout de moyens additionnels de liaison pour former cette coque.

Selon une réalisation de l'invention, la matrice organique de la (des) préforme(s) des parois latérales est essentiellement constituée d'une résine formant la matrice thermodurcisable, et la solidarisation des deux parois latérales avec la paroi tubulaire délimitant la veine de passage d'air est obtenue par durcissement (simultané) de la (des) préforme(s) des parois latérales.

Selon une autre réalisation de l'invention, la matrice organique de cette (ces) préforme(s) est essentiellement constituée d'une résine thermoplastique ; dans ce cas, deux portions respectives des parois à solidariser sont placées en regard l'une de l'autre, en position de recouvrement mutuel; après un éventuel ramollissement de ces portions par chauffage, ces portions sont pressées l'une contre l'autre et refroidies ; cette solidarisation des parois dans une zone de jonction peut être réalisée par une machine de placement de fibres pré imprégnées de résine thermoplastique qui assure le chauffage local (par jet d'air chaud) dans la zone de dépose. Ainsi, la résine est consolidée au fur et à mesure de la dépose. Lorsque la préforme est terminée, elle est déjà consolidée (par refroidissement naturel de la résine), ce qui évite l'étape de cuisson.

De préférence, la (les) préforme(s) est (sont) préparée(s) à partir de fibres - ou d'un tissu de fibres -, de carbone en particulier, qui est (sont) imprégné(es) de ladite résine.

De préférence, en outre, les fibres - et/ou le tissu - pré imprégné(es) est (sont) déposé(es) et orienté(es) mécaniquement sur un moule en relief ou en creux, et est (sont) chauffé(es) et pressé(es) contre la face externe (respectivement interne) du moule ; en variante ou en complément, un tissu pré imprégné peut être déposé et orienté manuellement sur ce moule.

De préférence encore, on solidarise simultanément, outre la (les) préforme(s) des parois latérales de carénage, une (ou deux) préforme(s) composite(s) de paroi de gouverne (ou dérive), entre elles ainsi qu'à la (les) préforme(s) de paroi(s) latérale(s) à partir de laquelle (desquelles) elle(s) s'étend(ent), et/ou une (ou deux) préforme(s) composite(s) de paroi de raccordement à une poutre de queue.

Selon un mode de réalisation de l'invention, on réalise une seule préforme en matériau composite par placement de fibres pré imprégnées autour d'un noyau ou mandrin segmenté, pour former lesdites deux parois latérales de carénage, ainsi que, de préférence, deux parois latérales de gouverne et/ou une paroi sensiblement cylindrique ou tronconique de liaison avec une poutre de queue de l'aéronef.

On désolidarise ensuite les segments de mandrin formant le mandrin segmenté, et on extrait ces segments de la cavité délimitée par la préforme des parois latérales de carénage notamment, par une ouverture prévue dans une de ces parois latérales ; on transfère ensuite la préforme dans un moule en creux en deux parties ; on insère de préférence une structure expansible et/ou rétractable de soutien de préforme - telle qu'une vessie gonflable - dans ladite cavité, et on solidifie la préforme dans un autoclave. Après polymérisation de la résine, la structure de queue est extraite du moule en creux et la structure de soutien est contractée et extraite de ladite cavité ; on solidarise ensuite à la structure de queue obtenue le conduit délimitant la veine d'air.

Selon une variante de réalisation de l'invention, on confectionne une seule préforme thermodurcissable sur un mandrin résistant à la chaleur, et on cuit la préforme enveloppée dans un sac à vide, en autoclave, ce qui évite le recours aux deux demi moules de cuisson.

Pour améliorer l'état de surface après cuisson, on peut intercaler entre la préforme et le sac à vide un matériau lisse et relativement rigide (plaque en silicone préformée, plis de verre polymérisés) qui évite l'empreinte des plis du sac à vide sur la préforme et donne à la surface externe de la préforme un aspect lisse.

Par ailleurs, en utilisant une matière dilatable pour le mandrin, la mise en pression pour le compactage de la préforme peut être assurée en partie au moins par la dilatation du mandrin ; à cet effet, on utilise de préférence une matière métallique présentant un coefficient de dilatation linéaire de l'ordre de 10⁻⁵m/°C, ou un coefficient de dilatation supérieur à cette valeur ; en particulier, le mandrin est réalisé dans un alliage d'acier ou d'aluminium présentant cette caractéristique.

Selon un autre mode de réalisation de l'invention, on réalise deux préformes latérales sensiblement symétriques par rapport à un plan ; chaque préforme en matériau (et/ou sandwich) composite comporte une première portion pour former une paroi (droite ou gauche) latérale de carénage, et de préférence une seconde portion pour former une paroi (droite ou gauche) latérale de gouverne, et/ou une troisième portion pour former une paroi de liaison avec une poutre de queue.

Chacune de ces portions présente au moins une bande (sensiblement plane) périphérique de jonction apte à être pliée/cintrée et recouvrir une bande périphérique de jonction d'une portion correspondante d'une préforme sensiblement symétrique.

Chacune de ces préformes est de préférence obtenue par placement mécanique sous pression de fibres pré imprégnées de résine, sur un demi moule (gauche ou droit) en relief ou en creux.

Les deux préformes (sensiblement symétriques) peuvent être placées respectivement dans deux demi moules en creux de forme adaptée, qui sont ensuite plaqués l'un contre l'autre ; les bandes périphériques de jonction respectives des deux préformes sont ensuite mises en contact mutuel intime en vue d'obtenir une bonne continuité structurale de la pièce finie dans cette zone de jonction correspondant sensiblement au plan de joint des demi moules.

Les deux demi moules en creux contenant les deux préformes ainsi agencées sont alors placés en autoclave pour le durcissement de la structure.

Après extraction de la pièce finie hors du moule, la paroi annulaire formant conduit est solidarisée par collage et rivetage à la pièce de carénage ainsi obtenue.

Dans le cas d'utilisation d'une résine thermoplastique, on peut réaliser la confection de deux préformes thermoplastiques sur deux mandrins puis la solidarisation des préformes par la zone de jonction, par chauffage local.

Ce procédé permet d'éliminer le recours aux demi moules de cuisson et le passage en autoclave. Il nécessite un outillage de maintien des préformes pour positionner dans l'espace les deux préformes côte à côte, et un outillage de type forme et contre forme pour presser les lisières l'une contre l'autre pendant le chauffage local, qui peut d'ailleurs être assuré par cet outillage.

D'autres caractéristiques et avantages de l'invention apparaissent dans la description suivante, qui se réfère aux dessins annexés et qui illustre, sans aucun caractère limitatif, des modes préférés de réalisation de l'invention.

La figure 1 est une vue schématique de côté d'un outillage comportant un mandrin segmenté utilisé pour la fabrication d'une pièce de queue d'hélicoptère telle que celle illustrée figure 6, par un procédé de fabrication selon un premier mode de réalisation de l'invention.

Les figures 2 à 5 illustrent successivement des étapes d'un procédé de fabrication de la pièce de queue illustrée figure 6 à l'aide de l'outillage illustré figure 1 :

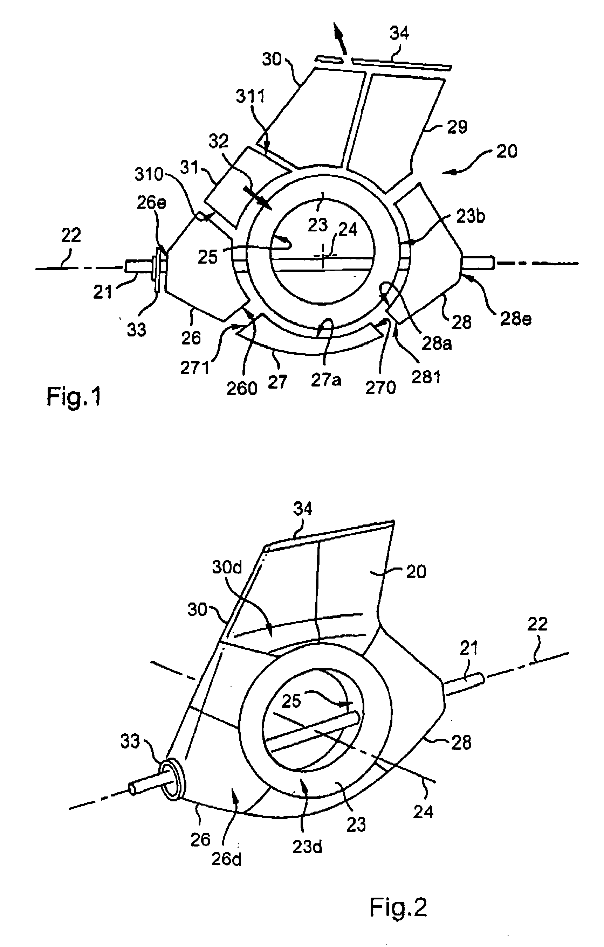

- la figure 2 montre, en vue en perspective schématique, l'outillage de la figure 1 comportant un mandrin et équipé d'un arbre permettant le pivotement du mandrin selon l'axe longitudinal de l'arbre ;

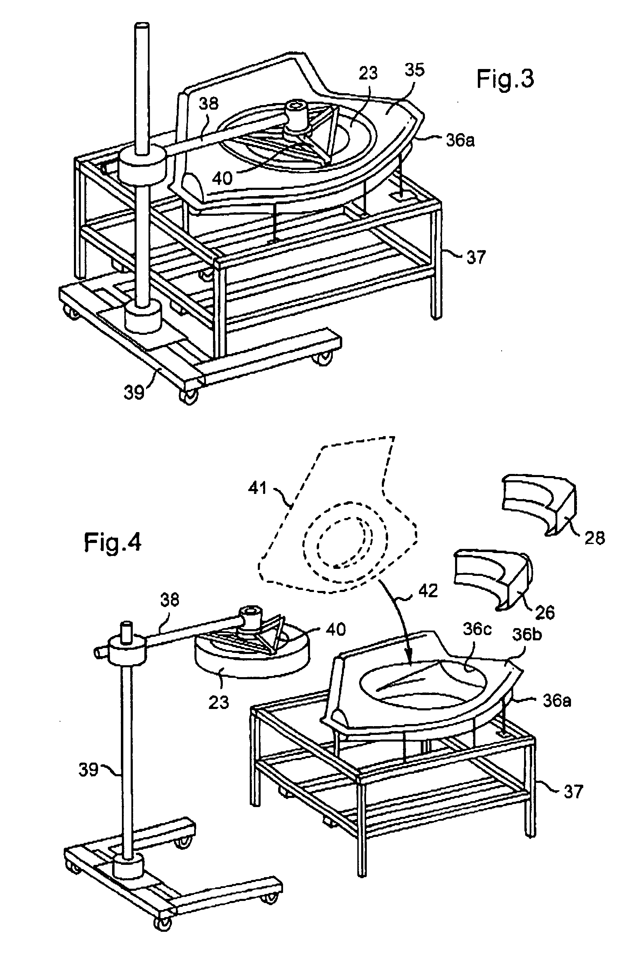

- la figure 3 illustre, en vue en perspective schématique, la mise en place, dans un demi-moule en creux, d'un mandrin drapé de prepreg ;
- la figure 4 illustre schématiquement l'extraction du mandrin hors de la cavité délimitée par la préforme posée dans un moule creux;

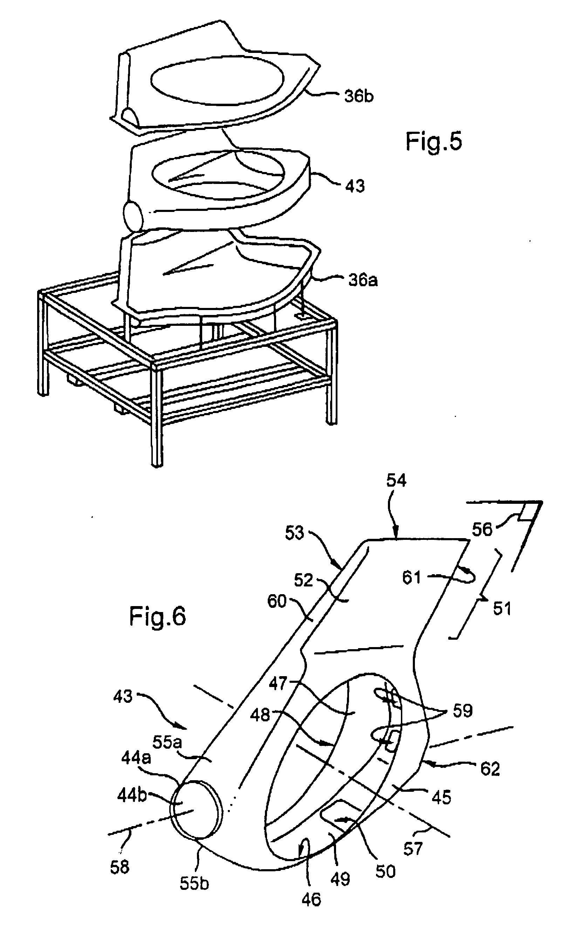

- la figure 5 illustre schématiquement l'extraction de la pièce de queue solidifiée hors du moule en creux en deux parties ;
- la figure 6 illustre, en vue en perspective schématique, un exemple de pièce de queue d'hélicoptère avant la mise en place d'un conduit de veine.

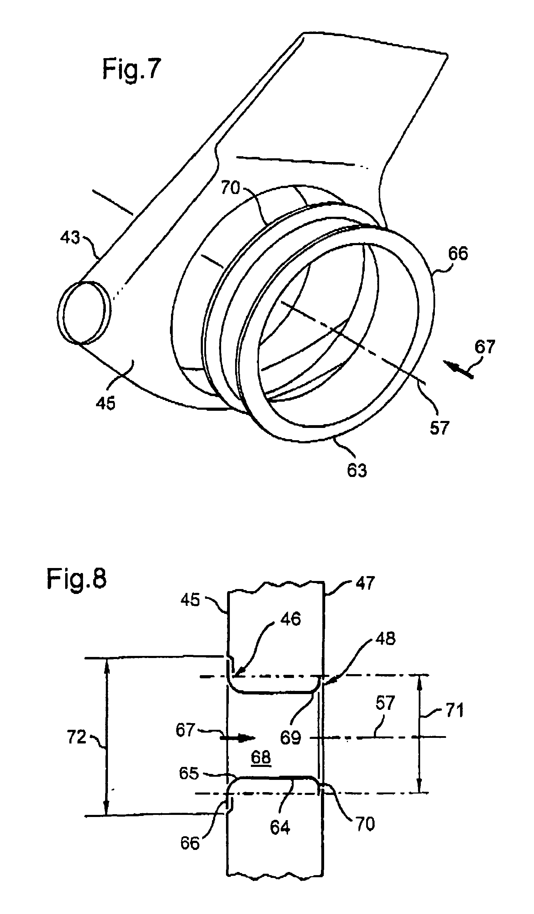

La figure 7 illustre, en vue en perspective schématique, la mise en place d'un conduit de veine dans une pièce de queue d'hélicoptère selon l'invention, en vue de la solidarisation mutuelle des deux pièces.

La figure 8 est une vue en coupe partielle, selon un plan de coupe contenant l'axe du conduit de veine d'air, de l'assemblage de ce conduit avec les deux parois latérales opposées d'une pièce de queue selon l'invention.

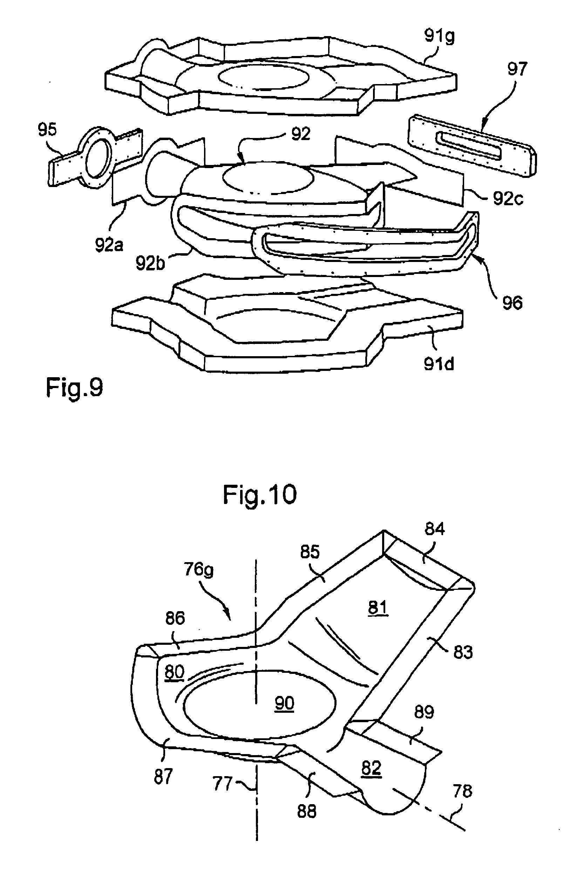

Les figures 9 à 11 sont relatives à un second mode de réalisation de l'invention.

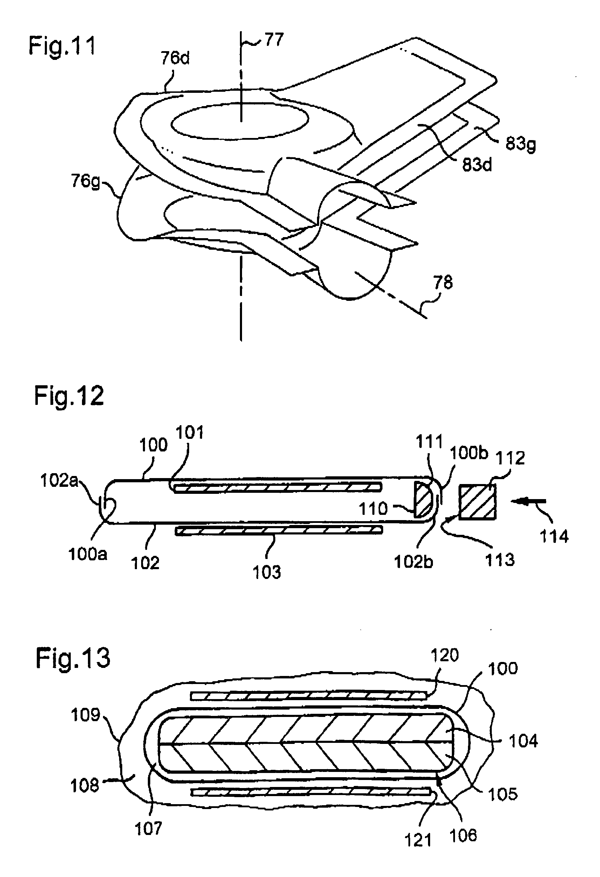

La figure 9 illustre, en vue en perspective schématique, un outillage pour l'assemblage de deux préformes telles que celles illustrées figure 11.

La figure 10 illustre, en vue en perspective schématique, une préforme conçue pour former la partie gauche d'une structure de queue selon l'invention.

La figure 11 illustre, avec sensiblement la même direction d'observation que pour la figure 10, deux préformes sensiblement symétriques, placées en regard l'une de l'autre.

La figure 12 illustre schématiquement, en vue en coupe transversale, un outillage de fabrication d'une coque thermoplastique par consolidation simultanée de portions de deux préformes se recouvrant.

La figure 13 illustre schématiquement, en vue en coupe transversale, un outillage de fabrication d'une structure de queue à partir d'une préforme supportée par un mandrin, par placage - sous l'effet d'une dépression - d'une enveloppe souple renfermant la préforme.

Sauf indication contraire, dans la présente demande, les termes « gauche » et « droit(e) », sont utilisés par référence à un observateur regardant la structure de queue d'hélicoptère et/ou l'hélicoptère, de l'arrière de celle-ci (celui-ci) ; les termes « avant » et « arrière » sont utilisés par référence à la direction normale d'avance de l'hélicoptère.

Par référence aux figures 1 à 4 notamment, le dispositif de moulage d'une structure de carénage composite comporte un noyau ou mandrin 20 susceptible d'être solidarisé, de façon réversible, à un arbre 21 présentant un axe longitudinal 22.

Le mandrin comporte une pièce centrale annulaire 23 présentant sensiblement une forme de révolution d'axe 24 ; la pièce 23 est percée de deux orifices 25 alignés, au travers desquels s'étend l'arbre 21.

Par référence à la figure 1, le mandrin comporte en outre six secteurs ou segments 26 à 31 de mandrin, qui sont disposés autour de la pièce 23 qu'ils encerclent.

Pour d'autres exemples de réalisation, le nombre des pièces constitutives du mandrin, la géométrie et l'agencement de ces pièces peuvent varier en fonction des contraintes géométriques, mécaniques et thermiques propres à chaque exemple de réalisation.

Chacun de ces secteurs - en particulier le secteur 27 ou 28 - présente une face concave d'appui interne - en particulier les faces 27a du secteur 27 et 28a du secteur 28 - qui est susceptible d'être placée en contact intime et/ou d'épouser une partie correspondante de la surface convexe externe 23b de la pièce 23.

Dans le cas où la surface externe 23b de la pièce 23 est de forme cylindrique selon l'axe 24 et présente un rayon constant par rapport à cet axe, les faces internes telles que 27a, 28a des secteurs 26 à 31 sont en forme de portion de cylindre, de même rayon, la réunion de ces faces internes couvrant sensiblement l'intégralité de la surface 23b ; ceci correspond à une configuration d'assemblage des secteurs (26 à 31) à la couronne centrale 23 ; la configuration illustrée figure 1 est différente, dans la mesure où les secteurs ont été représentés en position d'écartement par rapport à la pièce 23, pour améliorer la compréhension de la structure du mandrin.

Le passage de la configuration illustrée figure 1 à une configuration d'assemblage du mandrin permettant le dépôt de bandes de prepreg, comme illustré figure 2, est obtenu en rapprochant les secteurs de la pièce 23, par une translation sensiblement radiale, dirigée vers l'axe 24, selon la flèche 32 en ce qui concerne le secteur 31.

Dans cette position d'assemblage (figure 2), les secteurs sont rendus solidaires de la couronne 23 par des moyens de liaison usuels non représentés; dans cette configuration, deux secteurs adjacents sont sensiblement en contact par une de leurs faces d'extrémité respectives - telles que 260 et 271 pour les secteurs 26 et 27, ou telles que 270 et 281 pour les secteurs 27 et 28 - ; en outre, les faces latérales (externes) - telles que la face 26d du secteur 26 et la face 30d du secteur 30 - de deux secteurs adjacents sont tangentes le long de leurs bords en regard mutuel, et tangentes à la surface latérale 23d de la couronne 23, de façon à former une surface latérale lisse destinée à recevoir le prepreg, dans la configuration illustrée figure 2 dans laquelle les secteurs du mandrin ont été placés au contact de la couronne 23 et solidarisés à celle-ci.

Par référence aux figures 1 et 2, l'arbre 21 permettant la rotation du mandrin 20 selon l'axe 22, s'étend au travers des deux secteurs 26 et 28 du mandrin, en traversant une face frontale 26e du secteur 26 ainsi qu'une face arrière 28e du secteur 28.

L'outillage comporte en outre une pièce 33 en forme de disque, et une pièce 34 en forme de lame profilée ; la pièce 33 est percée d'une ouverture permettant le passage de l'arbre 21 ; la pièce 33 est rendue solidaire de la face avant 26e du secteur 26 avec lequel elle forme une partie de moule mâle pour une portion de la préforme en prepreg qui constitue une portion de raccordement de la structure composite de queue avec la partie arrière (ou poutre de queue) du fuselage d'un hélicoptère.

La pièce 34 est solidarisée à l'extrémité supérieure des secteurs 29 et 30 pour former une partie de moule mâle pour une portion de la préforme destinée à former une portion de dérive de la structure composite finale.

Après assemblage des secteurs 26 à 31, de la couronne 23, de l'arbre 21 et des pièces 33 et 34 pour former le mandrin ou moule mâle, celui-ci est monté rotatif (ou oscillant) sur le bâti d'une machine de placement automatique de prepreg, qui place une ou plusieurs couche(s) de fibres ou tissus imprégné(e)s de résine, sur la surface externe du mandrin, qui applique une pression - à l'aide d'un galet ou rouleau presseur - sur les fibres ou tissus déposé(e)s, et qui coupe ces fibres ou tissus à la longueur souhaitée ; ces opérations sont réalisées sous le contrôle d'un calculateur de la machine, en fonction d'un programme spécifique et de données relatives à la géométrie de la pièce à obtenir, et au nombre et à l'orientation des différents tronçons de fibres ou bandes de prepreg utilisé(e)s pour réaliser la préforme.

Comme mentionné en préambule, une portion au moins de la préforme correspondant aux parois latérales de la structure à obtenir, comporte une âme en nid d'abeille qui est mise en forme et pressée entre deux peaux de prepreg.

Lorsque la préforme est ainsi obtenue, l'arbre 21 est séparé du mandrin et celui-ci - supportant la préforme 35 - est placé dans un demi moule en creux 36a de forme adaptée à celle de la demi face externe de la pièce à obtenir ; à cet effet, comme illustré figure 3, le demi moule 36a est posé sur un support 37, tandis que le mandrin est supporté par un bras 38 d'un manipulateur 39, le bras 38 étant temporairement solidaire de la couronne 23 du mandrin par l'intermédiaire d'une structure triangulée 40.

Par référence à la figure 4, un second demi moule 36b percé d'une ouverture latérale 36c est ensuite solidarisé au demi moule 36a avec lequel il enveloppe la préforme; le mandrin est ensuite extrait de la préforme, par une ouverture latérale prévue dans une face latérale de la préforme et par l'ouverture 36c prévue dans la paroi du demi moule 36b, et qui s'étend sensiblement en regard de l'ouverture latérale de la préforme ; à cet effet, la couronne 23 est désolidarisée des segments et extraite du moule 36a, 36b, étant maintenue suspendue au bras 38 du manipulateur 39.

Un premier segment - tel que le segment 31 figure 1 - est ensuite déplacé selon la flèche 32 en direction de l'axe 24 pour venir en regard desdites ouvertures et être extrait du moule par celles-ci ; on extrait ensuite successivement les autres segments 26 à 30, en commençant de préférence par l'un des segments (26 ou 30) adjacents au segment 31 préalablement extrait, et ainsi de suite.

A cet effet, les faces d'extrémité des segments autres que le segment 31 - telles que les faces 270 et 271 pour le segment 27 - s'étendent sensiblement radialement par rapport à l'axe 24 qui correspond sensiblement à l'axe passant par le centre desdites ouvertures ; les faces d'extrémité 310 et 311 du segment 31 s'étendent par contre sensiblement parallèlement l'une à l'autre et parallèlement à la flèche 32 dirigée vers l'axe 24.

Après extraction des noyaux hors de la cavité délimitée par la préforme et par les parois du moule 36a, 36b qui supportent la préforme, une paroi 41 ou vessie déformable de soutien de la préforme est ensuite insérée (selon la flèche 42 figure 4) dans cette cavité, et est placée au contact de la face interne de la préforme afin de soutenir celle-ci pendant les opérations ultérieures du procédé.

A cet effet, la vessie peut être gonflée par un gaz - tel que de l'air - sous pression ; alternativement, une dépression peut être créée dans le moule 36a, 36b afin de plaquer les parois de la peau ou vessie 41 contre la face interne de la préforme creuse logée dans le moule.

Le moule contenant la préforme et la structure de soutien de préforme sont ensuite placés dans un autoclave ou une étuve pour durcir la résine du prepreg que comporte la préforme.

A l'issue de cette opération, les deux demi moules 36a et 36b sont séparés l'un de l'autre et la pièce selon l'invention est extraite de ce moule, comme illustré figure 5.

Par référence à la figure 6, la structure 43 de queue de l'hélicoptère ainsi obtenue présente approximativement une symétrie par rapport à un plan 56 antéro postérieur ; la structure comporte une première paroi latérale 45 percée d'une ouverture circulaire 46 dont le centre est situé sur un axe transversal 57 sensiblement orthogonal au plan 56 ; la structure 43 comporte une seconde paroi latérale 47 percée d'une ouverture circulaire 48 dont le centre est également situé sur l'axe 57.

La paroi 45 est prolongée vers le haut par une paroi 52 formant une paroi gauche de dérive 51, tandis que la paroi 47 est prolongée vers le haut par une paroi 53 formant une paroi droite de dérive.

Les parties frontales (ou parties avant) des parois 52 et 53 se joignent le long d'une zone frontale 60, et les parties avant des parois 45 et 47 se rejoignent pour former une zone frontale 55a, 55b dont la partie supérieure 55a prolonge la zone 60.

Entre les portions frontales incurvées 55a et 55b s'étend une portion 44a, 44b de raccordement de la structure de queue au fuselage de l'hélicoptère ; cette portion comporte une courte partie cylindrique 44a s'étendant selon un axe 58 contenu dans le plan 56, ainsi qu'une partie plane 44b en forme de disque d'axe 58, qui est ceinturée par la partie 44a.

Les parties inférieures des parois 45 et 47 se rejoignent pour former une zone inférieure 49 percée d'une ouverture 50, tandis que les parties arrière de ces parois 45, 47 forment une zone arrière de jonction 62 qui est percée d'une ouverture 59.

On observe également figure 6 que les parties supérieures des parois 52 et 53 se rejoignent par une portion plane 54, tandis que les parties arrière de ces parois 52, 53 se rejoignent le long d'une zone 61.

Les zones de jonction 49, 54, 55a et 55b, 60 à 62 forment avec les parois latérales 45, 47, 52, 53 et avec la structure de liaison 44a, 44b, une structure creuse rigide monobloc et légère.

Cette structure 43 est ensuite assemblée avec un conduit 63, comme illustré figures 7 et 8, pour former un carénage de rotor de queue d'hélicoptère.

Le conduit 63, qui est réalisé en matériau composite également, comporte une partie centrale 64 sensiblement cylindrique (de rayon sensiblement constant) selon l'axe 57.

En amont de cette partie centrale, par référence à la direction illustrée par la flèche 67 (figure 8) selon laquelle se déplace le flux d'air mû par le rotor (non représenté) disposé dans la veine 68 délimitée par le conduit 63, et qui correspond au sens inverse de la poussée aérodynamique de ce rotor anticouple, est prévu un convergent 65 à l'extrémité duquel s'étend une première bride circulaire 66.

A l'extrémité opposée du conduit 63, est prévu un divergent 69 terminé par une seconde bride 70 circulaire parallèle à la première bride 66 et de diamètre extérieur 71 inférieur au diamètre extérieur 72 de la bride 66.

Comme illustré figure 8 en particulier, la partie aval du conduit 63 est introduite à l'intérieur de la structure 43, en traversant l'ouverture 46 formée dans la paroi latérale 45, selon la flèche 67, jusqu'à ce que la bride 70 de petit diamètre vienne au contact de la face interne de la paroi 47, autour de l'ouverture 48 prévue dans cette paroi.

Dans cette configuration, la bride 66 de plus grand diamètre est au contact de la face externe de la paroi 45, autour de l'ouverture 46 prévue dans celle-ci; dans cette position, les pièces 63 et 43 sont assemblées (par collage, par rivetage, par solidification de la matrice organique) des portions de bride du conduit 63 recouvrant les portions correspondantes des parois latérales de la pièce 43.

Dans le mode préféré de réalisation correspondant aux figures 9 à 11, la préforme globale est réalisée à partir de deux préformes sensiblement symétriques 76g et 76d illustrées figure 11.

La préforme de gauche 76g illustrée figure 10 comporte une partie centrale 90 sensiblement circulaire, s'étendant perpendiculairement à un axe 77 passant par son centre ; une portion de préforme latérale 80 s'étend autour de la partie centrale 90 ; une portion 82 de liaison avec le fuselage s'étend à partir de la portion 80 ; la portion 82 présente sensiblement la forme d'une demi calotte tronconique d'axe 78 parallèle au plan de la partie 90 ; une portion de préforme de paroi gauche de dérive 81 s'étend également à partir de la portion 80.

Chacune des parties 80, 81, 82 de préforme en prepreg est prolongée à sa périphérie par une bande de prepreg, ces bandes étant respectivement repérées 83 à 89.

Ces bandes servent à former une portion périphérique de jonction entre les deux (demi) préformes de la structure de queue.

En effet, comme illustré figures 9 et 11, lorsque une préforme gauche 76g est disposée en regard d'une préforme droite 76d, dans le moule de la figure 9 comportant deux demi moules en creux 91g et 91d de forme adaptée, leurs bandes de jonction respectives - telles que la bande 83d formant lisière frontale de la préforme 76d et la bande 83g formant lisière frontale de la préforme 76g - sont placées en regard l'une de l'autre ; les deux préformes s'appuyant sur un noyau central 92 (figure 9), leurs bandes périphériques (ou lisières) respectives sont rabattues l'une sur l'autre deux à deux et pressées l'une contre l'autre, pour former une zone de jonction périphérique ceinturant sensiblement la préforme.

L'outillage illustré figure 9 comporte en outre trois pièces aplaties 95 à 97; ces pièces servent à réaliser une étanchéité entre les faces d'extrémité respectives 92a, 92b et 92c du noyau souple 92 de soutien de la préforme dans le moule, avec les parois périphériques correspondantes du moule 91d, 91g ; elles permettent en outre d'assurer une liaison mécanique entre les deux demi moules.

Après fermeture du moule illustré figure 9, durcissement de la résine, et ouverture du moule, la pièce obtenue est similaire à celle illustrée figure 6 ; on observe sur cette figure que la pièce 43 présente une forme complexe, aplatie selon l'axe 57, et allongée selon une direction du plan 56 qui est voisine des directions respectives des bords d'attaque et de fuite de la partie formant dérive ; cette pièce présente des portions concaves de raccordement respectif des portions latérales 45, 47 avec les portions latérales 52 et 53 ; les portions 45, 47 latérales de carénage sont en grande partie évidées.

Par référence à la figure 12, une première demi préforme thermoplastique 100 est soutenue par un outil 101 de maintien, et une seconde demi préforme thermoplastique 102 est soutenue par un autre outil 103 de maintien de la préforme.

Une portion périphérique (ou bord) 102a de la préforme 102 recouvre une portion périphérique 100a de la préforme 100 ; de façon symétrique, un bord 100b de la préforme 100 recouvre un bord 102b de la préforme 102.

Un outil mâle 110 de formage s'étend entre les préformes 100 et 102, dont une partie 111 disposée en regard des bords 100b et 102b à solidariser épouse la forme de la face interne de la pièce à réaliser, dans la zone de jonction des bords 100b, 102b.

Un outil femelle 112 de formage s'étend à l'extérieur des préformes ; une partie 113 de l'outil 112 est disposée en regard des bords 100b, 102b superposés, qui épouse la forme de la face externe de la pièce à réaliser, dans cette zone de jonction.

La solidarisation des bords 100b, 102b est obtenue en déplaçant l'outil 112 selon la flèche 114 en direction de l'outil 110, pour comprimer les bords entre les faces 111 et 113 des outils 110, 112.

Cette opération peut nécessiter le ramollissement des bords par chauffage ; elle permet la solidarisation par fusion de la résine des bords, puis refroidissement de cette résine.

Par référence à la figure 13, la préforme 100 est soutenue par un mandrin en deux parties 104, 105 dont elle épouse la surface externe 106.

Des moyens de mise en dépression de l'espace interstitiel 107 séparant le mandrin de la préforme et/ou de l'espace interstitiel 108 séparant la préforme de l'enveloppe 109, permettent de plaquer contre la surface externe de la préforme, les conformateurs et les parties d'enveloppe.

Un sac ou enveloppe 109 étanche entoure la préforme 100 et des conformateurs anti-rides 120, 121 intercalés entre la préforme et l'enveloppe ; la face interne 123, 124 des conformateurs 120, 121 est adaptée à la forme de parties correspondantes de la face externe de la pièce obtenue par rigidification de la préforme 100.

Il va sans dire que divers ajouts, omissions, ou modifications pourront être apportés par l'homme du métier aux différents modes de réalisation décrits ci avant, tant dans leurs éléments structurels que dans leurs composantes fonctionnelles, sans sortir du cadre de la présente invention.

## Revendications

1. Procédé de fabrication d'une structure de queue (43) d'un aéronef à voilure tournante, la structure de queue (43) comportant : un conduit (63) tubulaire présentant deux extrémités amont et aval suivant une direction d'écoulement d'un flux d'air (67) et comportant une première bride (66) et une seconde bride (70), s'étendant chacune à l'une des deux extrémités du conduit (63) tubulaire et un carénage de la structure de queue (43) avec une paroi latérale incurvée amont (45) et une paroi latérale incurvée aval (47) s'étendant respectivement autour de la première et de la seconde bride (66, 70) ; procédé dans lequel les deux parois latérales incurvées (45, 47) et le conduit (63) tubulaire sont réalisées en matériau composite comportant une matrice organique et des renforts, **caractérisé en ce que** le procédé prévoit :
. d'utiliser des renforts pré imprégnés de matrice organique pour réaliser au moins une préforme des parois latérales amont (45) et aval (47),
. de solidariser les parois latérales amont (45) et aval (47) par solidification de leur matrice organique,
. que la seconde bride (70) comporte un diamètre extérieur (71) circulaire parallèle à un diamètre extérieur (72) de la première bride (66), ledit diamètre extérieur (71) étant inférieur au diamètre extérieur (72),
. d'introduire le conduit (63) tubulaire à l'intérieur des parois latérales amont (45) et aval (47), suivant la direction de déplacement du flux d'air (67), jusqu'à ce que la seconde bride (70) soit au contact de la paroi latérale aval (47) et la première bride (66) soit au contact de la paroi latérale amont (45), et
. d'assembler le conduit (63) tubulaire à l'intérieur des parois latérales amont (45) et aval (47).

2. Procédé selon la revendication 1, **caractérisé en ce que** lesdites préformes sont obtenues par placement mécanique sous pression de fibres pré imprégnées de résine, respectivement chacune sur un demi moule.

3. Procédé selon la revendication 1, **caractérisé en ce qu'**un outil mâle (110) de formage est étendu entre les préformes (100 et 102), avec une partie (111) disposée en regard de bords superposés (100b, 102b) à solidariser de ces préformes (100 et 102), et un outil femelle (112) de formage est étendu à l'extérieur des préformes (100 et 102) avec une partie (113) de l'outil femelle (112) en regard des bords superposés (100b, 102b), dans cette zone de jonction la solidarisation des bords superposés (100b, 102b) est obtenue par fusion puis refroidissement de ladite matrice organique, en déplaçant l'outil (112) le long desdits bords superposés (100b, 102b) en les comprimant, suite à un ramollissement des bords superposés (100b, 102b) par chauffage.

4. Procédé selon l'une des revendications 1 à 3, **caractérisé en ce que** on réalise une préforme des deux parois latérales (45-47) de carénage, la préforme présentant une zone de jonction des parois latérales (45-47), cette zone de jonction comportant ladite matrice organique, et on solidarise ces deux parois (45-47) par solidification et consolidation de la matrice organique dans la zone de jonction.

5. Procédé selon l'une des revendications 1 à 3, **caractérisé en ce que** on réalise deux préformes avec chacune une paroi latérale amont (45) et aval (47), les deux préformes présentant une zone de jonction des parois latérales (45-47), cette zone de jonction comportant ladite matrice organique, et on solidarise ces deux préformes par solidification et consolidation de la matrice organique des parois latérales (45-47) dans la zone de jonction.

6. Procédé selon l'une des revendications 1 à 5, **caractérisé en ce que** la ou les préformes de carénage sont solidarisées simultanément avec au moins une préforme composite de paroi (44a, 44b, 82) de raccordement à une poutre de queue.

7. Procédé selon l'une des revendications 1 à 6, **caractérisé en ce que** une seule préforme (35) en matériau composite est réalisée par placement de fibres pré imprégnées autour d'un mandrin (20) segmenté, pour former lesdites deux parois latérales (45-47) de carénage, ainsi que, deux parois latérales de gouverne et / ou une paroi de liaison avec une poutre de queue de l'aéronef.

8. Procédé selon la revendication 9, **caractérisé en ce que** les segments (26 à 31) formant le mandrin (20) segmenté, sont désolidarisés et que les segments sont extraits de la cavité délimitée par la préforme des parois latérales (45-47) de carénage, par une ouverture (48-50) dans l'une de ces parois latérales (45-47).

9. Procédé selon la revendication 8, **caractérisé en ce que** suite à l'extraction du mandrin, la préforme est transférée dans un moule en creux en deux parties (36a, 36b), puis une structure (41) expansible et / ou rétractable de soutien de préforme est insérée dans ladite cavité délimitée par la préforme des parois latérales (45-47) de carénage, pour solidification de la préforme.

10. Outillage pour positionner et maintenir des préformes de fabrication d'une structure de queue (43) d'un aéronef à voilure tournante , **caractérisé en ce que** l'outillage comporte un mandrin (20) susceptible d'être solidarisé, de façon réversible, à un arbre (21) présentant un axe longitudinal (22), le mandrin (20) comportant :
- une pièce centrale annulaire (23) présentant sensiblement une forme de révolution d'axe (24), la pièce (23) étant percée de deux orifices (25) alignés au travers desquels peut s'étendre l'arbre (21) ; et
- des secteurs ou segments (26 à 31) de mandrin (20), qui sont disposés autour de la pièce (23) qu'ils encerclent ; cet outillage étant mis en oeuvre dans le procédé selon l'une des revendications 1 à 10 de sorte que le mandrin (20) forme moule mâle pour réaliser la préforme des parois latérales amont (45) et aval (47) de la structure de queue (43).

11. Outillage selon la revendication 10, **caractérisé en ce que** l'outillage comporte une structure (41, 92) déformable de soutien de préforme(s) à plaquer, par une mise en pression / dépression, contre une face interne de la (des) préforme(s) logée(s) dans un moule en creux (36a, 36b, 91d, 91g).

12. Structure (43, 63) de queue d'un aéronef à voilure tournante, obtenue par le procédé selon l'une des revendications 1 à 9, **caractérisé en ce que** ladite structure (43, 63) comporte une coque monobloc solidaire du conduit (63), avec au moins une zone d'inversion de courbure.

## Patentansprüche

1. Verfahren zur Herstellung eines Heckaufbaus (43) eines Drehflügel-Luftfahrzeugs, wobei der Heckaufbau (43) aufweist: einen rohrförmigen Kanal (63) mit einem vorderen und einem hinteren Ende gemäß einer Strömungsrichtung eines Luftstroms (67), und der einen ersten Flansch (66) und einen zweiten Flansch (70) aufweist, die sich jeweils an einem der beiden Enden des rohrförmigen Kanals (63) erstrecken, und eine Verkleidung des Heckaufbaus (43) mit einer vorderen gekrümmten Seitenwand (45) und einer hinteren gekrümmten Seitenwand (47), die sich jeweils um den ersten und den zweiten Flansch (66, 70) erstrecken, wobei bei dem Verfahren die beiden gekrümmten Seitenwände (45, 47) und der rohrformige Kanal (63) aus einem Verbundmaterial hergestellt werden, das eine organische Matrix und Aussteifungen aufweist,
**dadurch gekennzeichnet, dass** das Verfahren vorsieht:
- vorimprägnierte Aussteifungen aus einer organischen Matrix zu verwenden, um mindestens eine Vorform der vorderen und hinteren Seitenwände (45, 47) herzustellen,
- die vorderen und hinteren Seitenwände (45, 47) durch Verfestigung ihrer organischen Matrix fest miteinander zu verbinden,
- wobei der zweite Flansch (70) einen kreisförmigen Außenumfang (71) aufweist, der parallel zu einem Außenumfang (72) des ersten Flansches (66) ist, wobei der Außenumfang (71) kleiner ist als der Außenumfang (72),
- den rohrförmigen Kanal (63) in das Innere der vorderen und hinteren Seitenwände (45, 47) in Bewegungsrichtung der Luftströmung (67) einzuführen, bis der zweite Flansch (70) in Kontakt mit der hinteren Seitenwand (47) ist, und der erste Flansch (66) in Kontakt mit der vorderen Seitenwand (45) ist, und
- den rohrförmigen Kanal (63) im Inneren der vorderen und hinteren Seitenwände (45, 47) zusammenzufügen.

2. Verfahren nach Anspruch 1,
**dadurch gekennzeichnet, dass** die Vorformen erhalten werden durch ein mechanisches Anordnen von vorimprägnierten Harzfasern unter Druck jeweils in einer Halbschale.

3. Verfahren nach Anspruch 1,
**dadurch gekennzeichnet, dass** ein männliches Formwerkzeug (110) zwischen die Vorformen (100 und 102) eingeführt wird mit einem Teil (111), der gegenüber überlappenden Rändern (100b, 102b) angeordnet ist, um diese Vorformen (100 und 102) fest miteinander zu verbinden, und ein weibliches Formwerkzeug (112) außerhalb der Vorformen (100 und 102) mit einem weiblichen Formwerkzeugteil (113) gegenüber den überlappenden Rändern (104b, 102b) angeordnet wird, wobei in diesem Verbindungsbereich die Verfestigung der überlappenden Ränder (100b, 102b) erhalten wird durch Verschmelzung und anschließender Abkühlung der organischen Matrix, indem das Werkzeug (112) entlang der überlappenden Ränder (100b, 102b) bewegt wird, wobei diese zusammengepresst werden nach einem Aufweichen der überlappenden Ränder (100b, 102b) durch Aufheizen.

4. Verfahren nach einem der Ansprüche 1 bis 3,
**dadurch gekennzeichnet, dass** eine Vorform der beiden Verkleidungsseitenwände (45-47) hergestellt wird, wobei die Vorform einen Verbindungsbereich der Seitenwände (45-47) aufweist, wobei der Verbindungsbereich die organische Matrix aufweist, und die beiden Seitenwände (45-47) fest miteinander verbunden werden durch Aushärten und Verfestigen der organischen Matrix in dem Verbindungsbereich.

5. Verfahren nach einem der Ansprüche 1 bis 3,
**dadurch gekennzeichnet, dass** zwei Verformen hergestellt werden mit jeweils einer vorderen (45) und hinteren (47) Seitenwand, wobei die beiden Vorformen einen Verbindungsbereich der Seitenwände (45-47) aufweist, wobei dieser Verbindungsbereich die organische Matrix aufweist, und man diese beiden Vorformen fest miteinander verbindet durch Aushärten und Verfestigen der organischen Matrix der Seitenwände (45-47) in dem Verbindungsbereich.

6. Verfahren nach einem der Ansprüche 1 bis 5,
**dadurch gekennzeichnet, dass** die Verkleidungsvorformen gleichzeitig mit mindestens einer Verbundmaterialvorform einer Wand (44a, 44b, 82) zur Verbindung mit einem Heckträger fest verbunden werden.

7. Verfahren nach einem der Ansprüche 1 bis 6,
**dadurch gekennzeichnet, dass** eine einzige Vorform (35) aus Verbundmaterial hergestellt wird durch Anordnen vorimprägnierter Fasern um ein unterteiltes Futter (20) herum, um die beiden Verkleidungsseitenwände (45-47) sowie zwei Führungsseitenwände und/oder eine Wand zur Verbindung mit einem Heckträger des Luftfahrzeugs zu formen.

8. Verfahren nach Anspruch 7,
**dadurch gekennzeichnet, dass** die Abschnitte (26 bis 31), die das unterteilte Futter (20) bilden, abgelöst werden, und die Abschnitte aus dem Hohlraum entfernt werden, der durch die Vorform der Verkleidungsseitenwände (45-47) begrenzt ist, durch eine Öffnung (48-50) in einer der Seitenwände (45-47).

9. Verfahren nach Anspruch 8,
**dadurch gekennzeichnet, dass** nach der Entfernung des Futters die Vorform in eine zweiteilige Hohlform (36a, 36b) überführt wird, und anschließend eine ausdehnbare Struktur (41) und/oder eine zusammenziehbare Struktur zur Halterung der Vorform in den Hohlraum eingeführt wird, der durch die Vorform der Verkleidungsseitenwände (45-47) gebildet wird, um die Vorformen zu verfestigen.

10. Werkzeug zum Positionieren und Halten von Vorformen zur Herstellung eines Heckaufbaus (43) eines Drehflügel-Luftfahrzeugs, **dadurch gekennzeichnet, dass** das Werkzeug ein Futter (20) aufweist, das lösbar an einer Welle (21) befestigbar ist, die eine Längsachse (22) aufweist, wobei das Futter (20) aufweist:
- ein ringförmiges Mittelteil (23), das im Wesentlichen eine um eine Achse (24) drehsymmetrische Form darstellt, wobei das Teil (23) mit zwei fluchtenden Öffnungen (25) durchbohrt ist, durch die sich die Welle (21) erstrecken kann, und
- Bereiche oder Abschnitte (26 bis 31) des Futters (20), die um das Teil (23) herum, das sie umgeben, angeordnet sind, wobei das Werkzeug in dem Verfahren gemäß einem der Ansprüche 1 bis 10 derart eingesetzt wird, dass das Futter (20) eine männliche Form bildet, um die Vorform der vorderen und hinteren Seitenwände (45, 47) des Heckaufbaus (43) zu bilden.

11. Werkzeug gemäß Anspruch 10,
**dadurch gekennzeichnet, dass** das Werkzeug einen verformbaren Aufbau (41, 92) zur Halterung der Vorform bzw. Vorformen aufweist, der durch Unter-Druck-Setzen/Druckablassen gegen eine Innenwand der Vorform bzw. der Vorformen, die in einer Hohlform (36a, 36b, 91d, 91g) angeordnet ist bzw. angeordnet sind, anzupressen ist.

12. Aufbau (43, 63) eines Hecks eines Drehflügel-Luftfahrzeugs, erhalten durch das Verfahren gemäß einem der Ansprüche 1 bis 9, **dadurch gekennzeichnet, dass** der Aufbau (43, 63) ein einstückiges Gehäuse aufweist, das mit dem Kanal (63) fest verbunden ist, mit mindestens einem Krümmungsumkehrungsbereich.

## Claims

1. Method of manufacturing a tail structure (43) of a rotary wing aircraft, the tail structure (43) comprising: a tubular duct (63) having an upstream end and a downstream end in a flow direction of an air flow (67) and comprising a first flange (66) and a second flange (70), each extending at one of the two ends of the tubular duct (63) and a fairing of the tail structure (43) with an upstream curved side wall (45) and a downstream curved side wall (47) extending respectively around the first and the second flange (66, 70); in which method the two curved side walls (45, 47) and the tubular duct (63) are made of a composite material comprising an organic matrix and reinforcements, **characterised in that** the method provides:
- for using reinforcements preimpregnated with organic matrix for making at least one preform of the upstream side wall (45) and downstream side wall (47),
- for uniting the upstream side wall (45) and downstream side wall (47) by solidifying their organic matrix,
- that the second flange (70) comprises a circular outside diameter (71) parallel to an outside diameter (72) of the first flange (66), said outside diameter (71) being smaller than the outside diameter (72),
- for inserting the tubular duct (63) inside the upstream side wall (45) and downstream side wall (47), in the direction of displacement of the air flow (67), until the second flange (70) is in contact with the downstream side wall (47) and the first flange (66) is in contact with the upstream side wall (45), and
- for assembling the tubular duct (63) inside the upstream side wall (45) and downstream side wall (47).

2. Method according to claim 1, **characterised in that** said preforms are obtained by mechanically placing resin-preimpregnated fibres under pressure, each respectively on a half-mould.

3. Method according to claim 1, **characterised in that** a male forming tool (110) is extended between the preforms (100 and 102), with a portion (111) arranged facing superposed edges (100b, 102b) to be united with these preforms (100 and 102), and a female forming tool (112) is extended outside the preforms (100 and 102) with a portion (113) of the female tool (112) facing the superposed edges (100b, 102b), in this junction zone the uniting of the superposed edges (100b, 102b) is obtained by melting then cooling said organic matrix, while moving the tool (112) along said superposed edges (100b, 102b) while compressing them, following a softening of the superposed edges (100b, 102b) by heating.

4. Method according to one of claims 1 to 3, **characterised in that** a preform of the two fairing side walls (45-47) is made, the preform having a junction zone of the side walls (45-47), this junction zone comprising said organic matrix, and these two walls (45-47) are united by solidifying and consolidating the organic matrix in the junction zone.

5. Method according to one of claims 1 to 3, **characterised in that** two preforms each with an upstream side wall (45) and a downstream side wall (47) are made, the two preforms having a junction zone of the side walls (45-47), this junction zone comprising said organic matrix, and these two preforms are united by solidifying and consolidating the organic matrix of the side walls (45-47) in the junction zone.

6. Method according to one of claims 1 to 5, **characterised in that** the fairing preform(s) are simultaneously united with at least one composite wall preform (44a, 44b, 82) for connection to a tail boom.

7. Method according to one of claims 1 to 6, **characterised in that** a single preform (35) of composite material is made by placing preimpregnated fibres around a segmented mandrel (20) to form said two fairing side walls (45-47), as well as, two control-surface side walls and/or a wall for connection with a tail boom of the aircraft.

8. Method according to claim 7, **characterised in that** the segments (26 to 31) forming the segmented mandrel (20) are separated and that the segments are extracted from the cavity defined by the preform of the fairing side walls (45-47), via an opening (48-50) in one of said side walls (45-47).

9. Method according to claim 8, **characterised in that** following the extraction of the mandrel, the preform is transferred into a two-part recessed mould (36a, 36b), then an expandable and/or retractable preform support structure (41) is inserted into the cavity defined by the preform of the fairing side walls (45-47), for solidification of the preform.

10. Tooling for positioning and holding preforms for manufacturing a tail structure (43) of a rotary wing aircraft, **characterised in that** the tooling comprises a mandrel (20) suitable for being reversibly united with a shaft (21) having a longitudinal axis (22), the mandrel (20) comprising:
- an annular central part (23) having substantially a shape of revolution of axis (24), the part (23) being pierced by two aligned orifices (25) through which the shaft (21) can extend; and
- sectors or segments (26 to 31) of the mandrel (20), which are arranged around the part (23) which they encircle; this tooling being used in the method according to one of claims 1 to 10 so that the mandrel (20) forms a male mould for making the preform of the upstream side wall (45) and downstream side wall (47) of the tail structure (43).

11. Tooling according to claim 10, **characterised in that** the tooling comprises a deformable support structure (41, 92) for one/more preforms to be pressed, by applying pressure/depression, against an inside face of the preform(s) received in a recessed mould (36a, 36b, 91d, 91g).

12. Tail structure (43, 63) of a rotary wing aircraft, obtained by the method according to one of claims 1 to 9, **characterised in that** said structure (43, 63) comprises a one-piece shell secured to the duct (63), with at least one curvature reversal zone.
